Europäisches Patentamt

European Patent Office

Office européen des brevets

(19)

(11) Veröffentlichungsnummer: **0 103 885**
**B1**

(12)

# EUROPÄISCHE PATENTSCHRIFT

(45) Veröffentlichungstag der Patentschrift:
**20.11.86**

(21) Anmeldenummer: **83109305.9**

(22) Anmeldetag: **20.09.83**

(51) Int. Cl.⁴: **B 21 D 5/00,** B 21 D 28/00,
B 21 D 35/00

(54) **Stanz-Biegemaschine.**

(30) Priorität: **22.09.82 DE 3234981**

(43) Veröffentlichungstag der Anmeldung:
**28.03.84 Patentblatt 84/13**

(45) Bekanntmachung des Hinweises auf die Patenterteilung:
**20.11.86 Patentblatt 86/47**

(84) Benannte Vertragsstaaten:
**AT BE CH FR GB IT LI LU NL SE**

(56) Entgegenhaltungen:
**DE - A - 1 552 016**
**DE - A - 2 737 442**
**DE - A - 3 023 335**
**DE - B - 2 539 157**
**GB - A - 2 051 650**

(73) Patentinhaber: **Wünsch, Adolf, Ried 210, D-8959 Seeg
(DE)**

(72) Erfinder: **Mauderer, Ernst, Dr., Hans-Pfann-Strasse 62,
D-8000 München 82 (DE)**

(74) Vertreter: **Hübner, Hans-Jürgen, Dipl.-Ing.,
Mozartstrasse 21, D-8960 Kempten (DE)**

## Beschreibung

Die Erfindung betrifft eine Stanz-Biege-Maschine mit mehreren austauschbaren, hintereinander gestellten Gehäusen, an denen je ein oder mehrere Biegeaggregate verstellbar und austauschbar angeordnet sind, deren Steckwellen antriebsmässig mit einem Getriebe im Inneren des jeweiligen Gehäuses gekuppelt sind, wobei jedes Gehäuse an gegenüberliegenden Seiten koaxiale Antriebswellenenden aufweist, von denen jeweils eines mit einem Antriebswellenende des benachbarten Gehäuses lösbar gekuppelt ist.

Eine derartige Stanz-Biege-Maschine ist aus der DE-A-27 37 442 bekannt. In jedem Gehäuse ist ein Zentralrad gelagert, welches eine Anzahl sternförmig angeordneter Biegeaggregate antreibt. Die Antriebswellenenden stehen über Kegelgetriebe mit dem Zentralrad in Eingriff. Diese Kegelgetriebe müssen die Drehmomente aller nachgeschalteten Biegeaggregate der weiteren Gehäuse übertragen. Die Zahl der hintereinandergeschalteten Gehäuse ist begrenzt. Es treten Synchronisierfehler wegen der unvermeidbaren Getriebespiele auf, die sich addieren. Ein Ausbau einer Stanz-Biege-Maschine zu einer Fertigungsstrasse, in der z.B. mehrere unterschiedliche Teile gestanzt, gebogen, geschweisst, genietet und montiert werden, ist mit diesem Prinzip nicht möglich. Ausserdem ist die Variabilität begrenzt. Die Gehäuse mit einer Aufnahmekapazität von mindestens 8 Biegeaggregaten können nur als ganzes entfernt oder zugesetzt werden. Eine feinstufige Anpassung der Kapazität der Maschine an das jeweils zu produzierende Beispiel ist nicht möglich.

Aus der DE-A-30 23 335 ist eine Exzenterstanze bekannt, die einen durchgehenden, beidseitig über ihr Gehäuse vorstehenden Antriebswellenabschnitt aufweist, dessen Enden koaxial mit je einem Wellenabschnitt einer Profilierungseinrichtung gekuppelt sind. Für jede dieser Arbeitseinrichtungen ist ein Abnahmegetriebe vorgesehen, das von einer der Antriebswellenabschnitte angetrieben ist. Jede Arbeitseinrichtung weist ein eigenes Gehäuse auf. Die Gehäuse lassen sich nicht miteinander verbinden, was auch nicht nötig ist, weil diese Maschine eine Anlage darstellt, die kapazitätsmässig weder verkleinert noch vergrössert werden soll.

Aufgabe der Erfindung ist es, die Stanz-Biege-Maschine der eingangs genannten Art so auszubilden, dass sie eine für den jeweiligen Zweck passende Kapazität an Bearbeitungsaggregaten aufweist und bei geänderten Anforderungen schnell auf eine kleinere oder auf grössere Kapazität umgerüstet werden kann, ohne den Nachteil sich addierender Getriebespiele in Kauf nehmen zu müssen.

Diese Aufgabe wird erfindungsgemäss dadurch gelöst, dass jedes Gehäuse einen oberen und einen unteren identischen, bezüglich der mittleren Horizontalebene des Gehäuses spiegelbildlich angeordneten Gehäusekasten aufweist, dass beide Gehäusekästen jedes Gehäuses an den Enden miteinander verbunden sind, dass in beiden Gehäusekästen identische, parallele, von einem Ende des Gehäusekastens bis zum anderen Ende reichende Antriebswellenabschnitte gelagert sind, dass für jedes Biegeaggregat ein eigenes unmittelbar an einem der Antriebswellenabschnitte angetriebenes Abnahmegetriebe vorgesehen ist, dass die Gehäusekästen eines Gehäuses mit denen des anschliessenden Gehäuses jeweils baukastenartig stirnseitig lösbar und austauschbar verbunden sind und dass die oberen und unteren Antriebswellenabschnitte jeweils koaxial liegen und durch stirnseitige lösbare Kupplungen durchgehende Antriebswellen bilden.

Die stirnseitig offen ausgebildeten Gehäusekästen können z.B. je nur ein Bearbeitungsaggregat tragen. Durch Aneinanderfügen weiterer prinzipiell gleich ausgebildeter Gehäusekästen wird das Gehäuse verlängert und die Kapazität der Maschine stufenweise erhöht, ohne dass sich Getriebespiele addieren. Mit nur 3 Grundtypen von Gehäusekästen, die z.B. 1, 2 und 4 Bearbeitungsaggregate aufweisen, kann die Maschine besonders wirtschaftlich dem jeweiligen Bedarf feinstufig angepasst werden. Die Maschine hat dadurch einen sehr hohen Grad an Flexibilität.

Das Maschinengehäuse ist aus mehreren Einzelgehäusen zusammengesetzt, die je wiederum aus zwei Gehäusekästen bestehen, so dass sich eine baukastenartig zusammengefügte starre und geschlossene Gehäuseeinheit ergibt. Dank des Baukastensystems lassen sich mit identischen Grundbausteinen beliebige Stanz-Biege-Maschinen sogar in Form ganzer Fertigungsstrassen mit mehreren winklig zusammenlaufenden Strassenzügen schnell und kostengünstig realisieren.

Eine Weiterbildung der Erfindung besteht darin, dass jeweils zwei parallel angeordnete Gehäusekästen zusammen mit zwischen ihnen eingesetzten Abstandskörpern einen starren Rahmen bilden, der mittels eigener, ggf. Bodenrollen aufweisender Füsse selbsttragend ist. Diese Ausbildung erleichtert die Montage und den Umbau der Maschine.

Weitere Ausgestaltungen bestehen darin, dass die Öffnungen zum Durchtritt der querliegenden Abtriebswellen als Längsschlitze ausgebildet sind, in denen die Abtriebswelle oder die Abtriebswellen längsverschiebbar sind und auch darin, dass in jedem Gehäusekasten mindestens ein eigenes Getriebegehäuse verschiebbar angeordnet und lösbar befestigt ist, in welchem ein Abtriebsrad gelagert ist, und schliesslich darin, dass jeder Gehäusekasten zwei parallele, beidseitig der die beiden länglich ausgebildeten Gehäuse durchsetzenden, mittleren Maschinenlängsebene angeordnete Antriebswellenabschnitte aufweist, deren jedem ein oder mehrere Abnahmegetriebe zugeordnet sind. Alle Merkmale tragen dazu bei, die Biege- oder sonstigen Arbeitsaggregate stufenlos in Längsrichtung positionieren zu können und die Zahl der Aggregate verändern zu können. Zu diesem Zweck ist weiterhin vorteilhafterweise vorgesehen, dass der Gehäusekasten mindestens zwei in nebeneinander angeordneten Bahnen befindliche Getriebegehäuse aufweist, die je von einem der beiden Antriebswellenabschnitte durchsetzt werden und dass die Getriebegehäuse im Gehäusekasten längsverschiebbar geführt sind.

Vorteilhaft ist weiterhin, dass die koaxialen Antriebswellenabschnitte nicht über die Gehäusekästen axial vorstehen und stirnseitig durch aufgesetzte Kupplungen, insbesondere Bogenzahnkupplungen, miteinander verbunden sind. Damit lassen sich die Antriebswellenabschnitte ohne Verschiebung der Gehäuse entkuppeln.

Eine besonders bevorzugte Ausgestaltung ist darin zu sehen, dass jeder Gehäusekasten an den stirnseitig benachbarten Gehäusekästen mittels Klemmverbindungen derart befestigbar ist, dass er in Querrichtung zwischen den in Position bleibenden benachbarten Gehäusekasten herausnehmbar ist. Das Auswechseln einzelner Gehäuse einer langen Fertigungsstrasse wird dadurch sehr erleichtert.

Schliesslich ist gemäss einer vorteilhaften Ausgestaltung vorgesehen, dass die beiden Gehäusekästen des letzten Gehäuses durch einen Abschlusskasten verbunden sind, in dem sich ein Getriebe befindet, das alle Antriebswellenabschnitte dieser beiden Gehäusekästen miteinander kuppelt. Bei unterschiedlichen Belastungen einzelner Antriebswellen wird ein Drehmomentausgleich erreicht, der besonders lange Maschinengehäuse mit vielen Arbeitsaggregaten möglich macht.

Anhand der Zeichnung sei die Erfindung beispielsweise näher erläutert.

Es zeigen:

Fig. 1 eine auseinandergezogene Darstellung einer Stanz-Biege-Maschine,

Fig. 2 eine Draufsicht der zusammengebauten Maschine, gemäss Fig. 1,

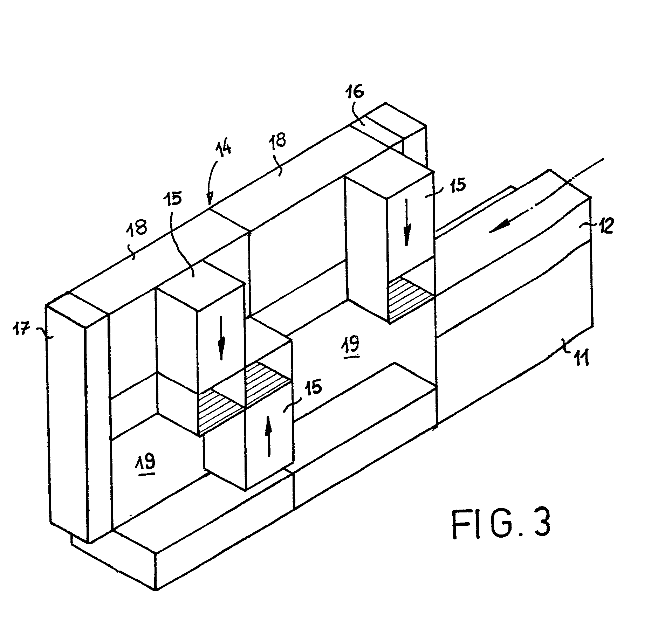

Fig. 3 eine Ansicht einer Maschine mit mehreren in Reihe zusammengesetzten Gehäusekästen,

Fig. 4 eine Draufsicht einer Maschine mit mehreren übereck zusammengesetzten Gehäusekästen;

Fig. 5 eine Ansicht einer Maschine ähnlich Fig. 4, jedoch mit innenseitig angeordneten Bearbeitungsaggregaten;

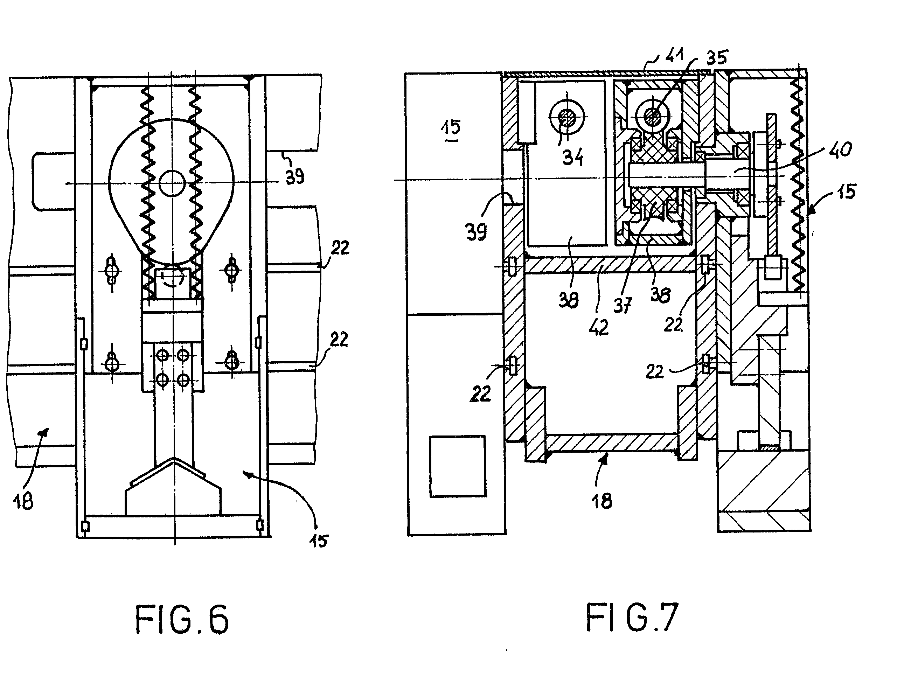

Fig. 6 eine Vorderansicht eines am Gehäusekasten befestigten Biegeaggregates;

Fig. 7 eine Schnittansicht durch einen oberen Gehäusekasten;

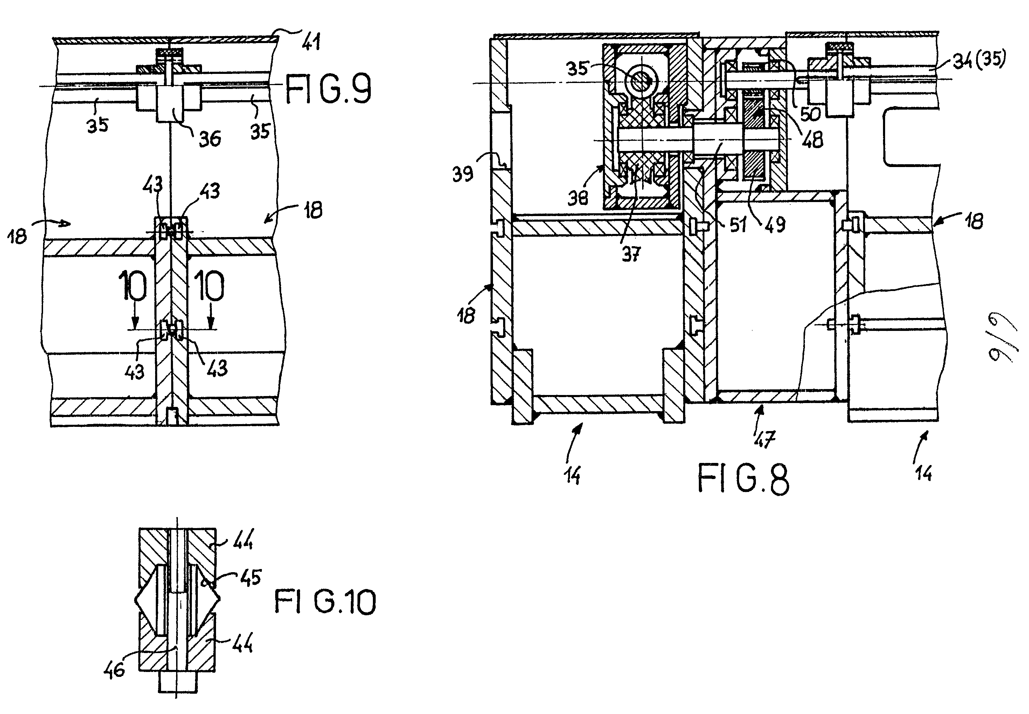

Fig. 8 eine Schnittansicht einer Übereckverbindung zweier Gehäusekästen;

Fig. 9 einen Längsschnitt einer Reihenverbindung zweier Gehäusekästen; und

Fig. 10 einen Schnitt durch eine Klemmeinrichtung der Gehäusekästen-Verbindung längs der Linie 10–10 der Fig. 9.

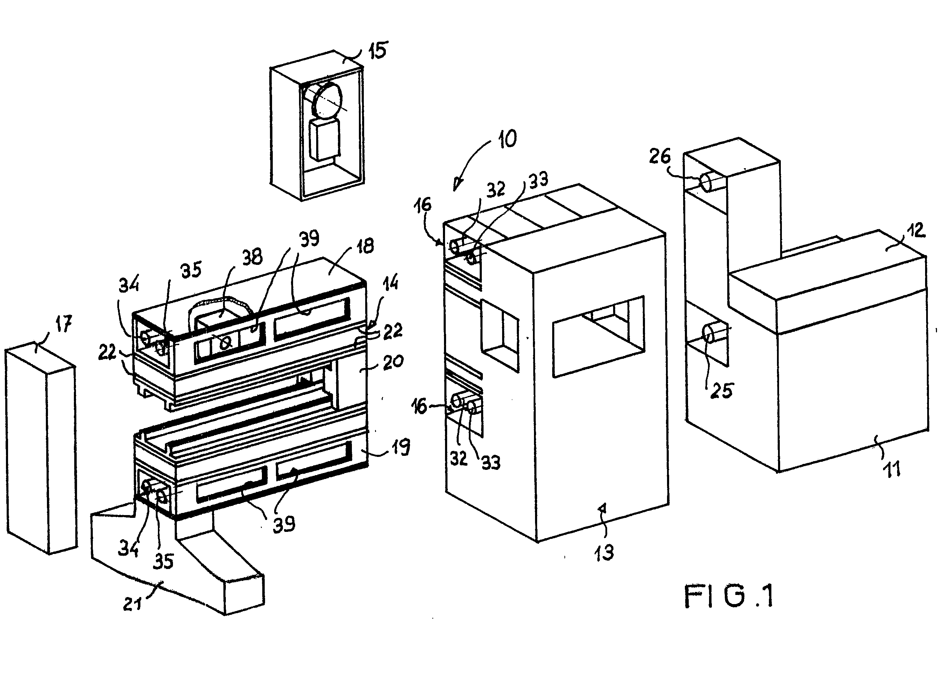

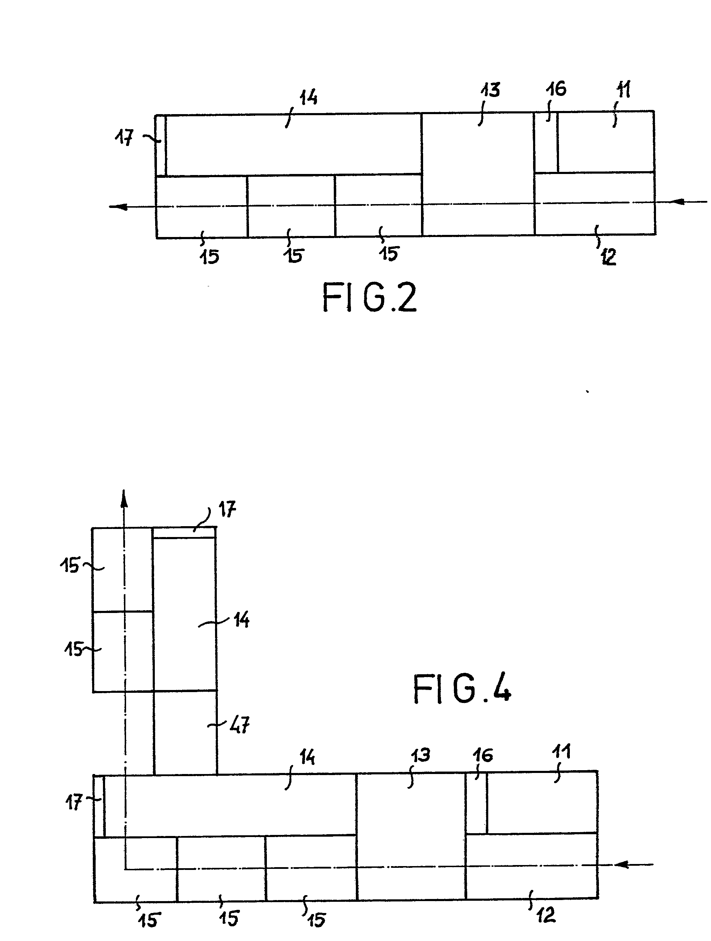

Eine Stanz-Biege-Maschine 10 besteht aus Antriebseinheit 11, Materialeinzugeinheit 12, Stanzpresse 13, mehreren Gehäusen 14, mit je einer Anzahl Bearbeitungsaggregaten 15, von denen in Figur 1 nur eines dargestellt ist, Verteilgetrieben 16 und Abschlusskasten 17. Das Gehäuse 14 besteht aus einem länglichen oberen Gehäusekasten 18 und einem identischen, jedoch bezüglich der mittleren Horizontalebene spiegelbildlich angeordneten unteren Gehäusekasten 19. Beide Gehäusekästen 18, 19 sind durch stirnseitige Abstandskörper 20 zu einem starren Rahmen verbunden. Dieser Rahmen ist auf zwei Füssen 21 mit Bodenrollen montiert. Jeder Gehäusekasten 18, 19 weist ringsum laufende, im Querschnitt T-förmige Nuten 22 auf, die zur Aufnahme von Nutensteinen dienen, mittels welchen mehrere Gehäusekästen 18 bzw. 19 miteinander und mit der Stanzpresse 13 und dem Abschlusskasten 17 lösbar verbunden sind (Fig. 2) . Diese Nuten 22 dienen an Vorder- und Rückflächen der Gehäusekästen 18, 19 zum Befestigen der Biegeaggregate 15.

Ein Antriebsmotor in der Antriebseinheit 11 treibt eine untere Hauptwelle 25 und eine obere Hauptwelle 26 an. Die beiden Hauptwellen 25, 26 stehen jeweils mit einem Verteilgetriebe 16 in Eingriff, das zwei Abtriebswellen 32, 33 mit gleicher Drehzahl antreibt.

In jedem der Gehäusekästen 18, 19 sind zwei Antriebswellen 34, 35 drehbar gelagert. Die Wellen haben etwa die Länge der Gehäusekästen 18, 19, die stirnseitig offen sind. Beide Antriebswellen 34, 35 sind an ihren stirnseitigen Enden zur Aufnahme einer Bogenzahnkupplung 36 (Fig. 9) ausgestattet, die ein leichtes Lösen der koaxialen Antriebswellen gestattet. Im mittleren Bereich sind die Wellen 34, 35 als Antriebsschnecken ausgebildet, die mit Schneckenrädern 37 in Antriebseingriff stehen, welche je in einem Getriebegehäuse 38 drehbar gelagert sind, von denen mehrere hintereinander und nebeneinander in jedem der beiden Gehäusekästen 18, 19 angeordnet sind. Diese Getriebegehäuse 38 sind stirnseitig offen und werden von den Antriebswellen 35, 36 durchsetzt. Die beiden Gehäusekästen 18, 19 weisen beidseitig je mehrere Längsschlitze 39 auf, deren Längsmittellinien mit den Achsen der Schneckenräder 37 horizontal ausgefluchtet sind.

Die Bearbeitungsaggregate 15 werden je über eine keilverzahnte Abtriebswelle 40 angetrieben, die koaxial in ein Schneckenrad 37 eingesteckt ist.

Das Bearbeitungsaggregat 15 mit der durch einen der Schlitze 39 hindurchtretenden Abtriebswelle 40 kann zusammen mit dem Getriebegehäuse 38 in Längsrichtung im Gehäusekasten 18 bzw. 19 verschoben und in der gewünschten Stellung mittels in den Nuten 22 laufender Nutensteine 43 und daran befestigten Schrauben 46 festgeklemmt werden. Die Getriebegehäuse 38 werden ihrerseits an den Gehäusekästen 18 und 19 lösbar befestigt. Die Getriebegehäuse 38 können entweder in genügender Anzahl eingebaut sein oder können auch, je nach Bedarf, eingesetzt werden, wofür es vorteilhaft ist, die Antriebswellen 34, 35 in geteilten Lagern anzuordnen, um sie nach Abnahme einer Abdeckplatte 41 herausnehmen zu können. Genauso gut ist es aber möglich, die Antriebswellen 34, 35 im Gehäusekasten 18 weiter nach unten zu legen, also benachbart einer Zwischenplatte 42 anzuordnen und die Gehäusekästen U-förmig und zu den Wellen 34, 35 hin offen auszubilden, so dass die Getriebegehäuse 38 in den oberen Gehäusekasten 18 einfach von oben eingesetzt werden können.

Die Verbindung zweier Gehäusekästen 18 bzw. 19 miteinander, mit der Stanzpresse und mit dem Abschlusskasten 17 geschieht mittels Nutensteinen 43, die in den stirnseitigen Nuten 22 verschiebbar sind und die mittels Klemmstücken 44 über Keilflächen 45 mittels einer Schraube 46 zusmmengezogen werden können. Die Gehäusekästen 18 bzw. 19 werden somit lösbar verspannt, nachdem die Antriebswellen 34, 34 bzw. 35, 35 mittels der Bogenzahnkupplungen 36 miteinander verbunden sind. Nach Lösen dieser Verbindungselemente stehen keine Teile stirnseitig aus den Gehäusekästen 18, 19 vor, so dass jeder einzelne Gehäusekasten 18, 19 nach vorn, nach hinten, nach oben oder unten aus der Maschine 10 herausgenommen werden kann, ohne die übrigen Gehäusekästen in ihren Positionen verändern zu müssen.

Die frei endenden vier Antriebswellenabschnitte 34, 34, 35, 35 der beiden Gehäusekästen 18, 19 des letzten Gehäuses 14 der Stanz-Biege-Maschine 10 sind durch ein Koppelgetriebe im Abschlusskasten 17 miteinander verbunden. Dieses Koppelgetriebe besteht aus zwei Verteilgetrieben, die den Verteilgetrieben 16 entsprechen, jedoch sind die beiden Zentralwellen der beiden Verteilgetriebe miteinander, zum Beispiel durch einen Zahnriemen antriebsmässig verbunden, wodurch bei unterschiedlicher Belastung der einzelnen Antriebswellen eine Kraftverteilung erfolgt. Alle vier Antriebswellen 34, 34, 35, 35 haben dieselbe hohe Antriebsdrehzahl, die erst an jedem einzelnen Bearbeitungsaggregat 15 untersetzt wird. Auf diese Weise lassen sich hohe Drehmomente übertragen und grosse Arbeitskräfte erzielen.

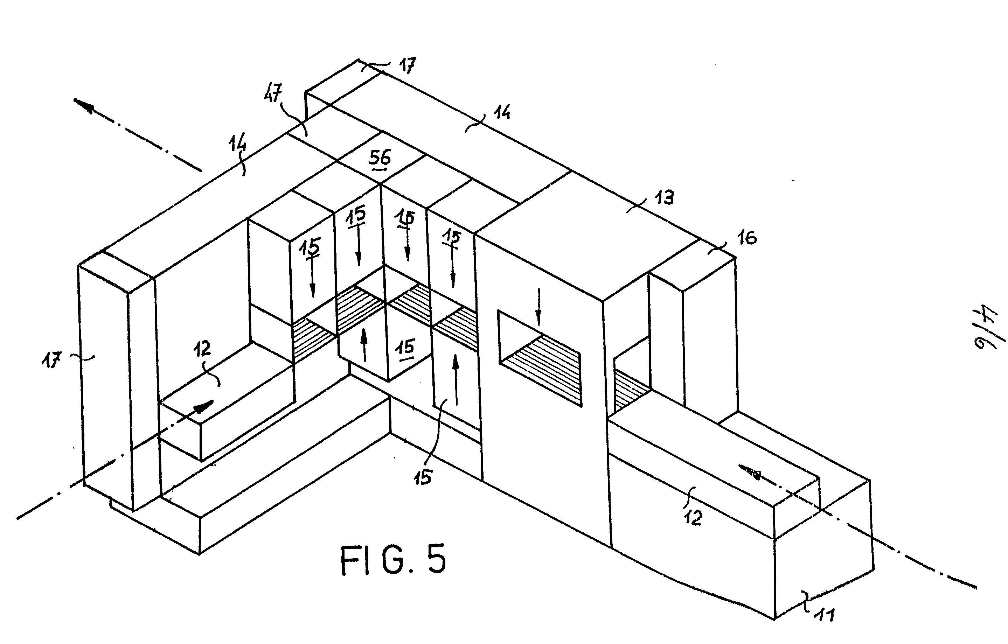

Die Figuren 4 und 5 veranschaulichen eine Übereckverbindung zweier Gehäuse 14 mittels Nutensteinen 43 unter Zwischenschaltung eines Verbindungsgehäuses 47, in dem ein Stirnradverteilgetriebe 48 angeordnet ist, dessen Hauptrad 49 mit zwei Nebenrädern 50 kämmt, wobei das Übersetzungsverhältnis genau gleich demjenigen des Schneckenrades 37 und der Antriebswelle 35 im Getriebegehäuse 38 ist. Eine Verbindungswelle 51 des Hauptrades 49 ist wie die Abtriebswelle 40 für jedes Biegeaggregat 15 in die Keilverzahnung des Schneckenrades 37 einsteckbar. Die beiden Wellen 34, 35 des über das Verbindungsgehäuse 47 Übereck angeschlossenen Gehäusekastens 18 rotieren somit synchron mit denjenigen des antreibenden Gehäusekastens 18 des anderen Gehäuses 14.

Jeder Schenkel der Übereckanordnung der Gehäuse 14 hat am Ende einen Abschlusskasten 17 mit eingebautem Synchronisierungsgetriebe, sodass der Getriebezug jeweils geschlossen ist.

## Patentansprüche

1. Stanz-Biege-Maschine mit mehreren austauschbaren, hintereinander gestellten Gehäusen (14), an denen je ein oder mehrere Biegeaggregate (15) verstellbar und austauschbar angeordnet sind, deren Steckwellen (40) antriebsmässig mit einem Getriebe (37) im Inneren des jeweiligen Gehäuses (14) gekuppelt sind, wobei jedes Gehäuse (14) an gegenüberliegenden Seiten koaxiale Antriebswellenenden aufweist, von denen jeweils eines mit einem Antriebswellenende des benachbarten Gehäuses (14) lösbar gekuppelt ist, dadurch gekennzeichnet, dass jedes Gehäuse (14) einen oberen und einen unteren identischen, bezüglich der mittleren Horizontalebene des Gehäuses (14) spiegelbildlich angeordneten Gehäusekasten (18; 19) aufweist, dass beide Gehäusekästen (18, 19) jedes Gehäuses (14) an den Enden miteinander verbunden sind, dass in beiden Gehäusekästen (18, 19) identische, parallele, von einem Ende des Gehäusekastens (18; 19) bis zum anderen Ende reichende Antriebswellenabschnitte (34, 35) gelagert sind, dass für jedes Biegeaggregat (15) ein eigenes unmittelbar an einem der Antriebswellenabschnitte (34, 35) angetriebenes Abnahmegetriebe (37, 40) vorgesehen ist, dass die Gehäusekästen (18, 19) eines Gehäuses (14) mit denen (18, 19) des anschliessenden Gehäuses (14) jeweils baukastenartig stirnseitig lösbar und austauschbar verbunden sind und dass die oberen und unteren Antriebswellenabschnitte (34, 35) jeweils koaxial liegen und durch stirnseitige lösbare Kupplungen (36) durchgehende Antriebswellen bilden.

2. Stanz-Biege-Maschine nach Anspruch 1, dadurch gekennzeichnet, dass jeweils zwei parallel angeordnete Gehäusekästen (18, 19) zusammen mit zwischen ihnen eingesetzten Abstandskörpern (20) einen starren Rahmen bilden, der mittels eigener, ggf. Bodenrollen aufweisender Füsse (21) selbsttragend ist.

3. Stanz-Biege-Maschine nach Anspruch 1 oder 2, dadurch gekennzeichnet, dass die Öffnungen zum Durchtritt der querliegenden Abtriebswellen (40) als Längsschlitze (39) ausgebildet sind, in denen die Abtriebswelle (40) oder die Abtriebswellen längsverschiebbar sind.

4. Stanz-Biege-Maschine nach einem der Ansprüche 1 bis 3, dadurch gekennzeichnet, dass in jedem Gehäusekasten (18, 19) mindestens ein eigenes Getriebegehäuse (38) verschiebbar angeordnet und lösbar befestigt ist, in welchem ein Abtriebsrad (37) gelagert ist.

5. Stanz-Biege-Maschine nach den Ansprüchen 1 bis 4, dadurch gekennzeichnet, dass jeder Gehäusekasten (18, 19) zwei parallele, beidseitig der die beiden länglich ausgebildeten Gehäuse (14) durchsetzenden, mittleren Maschinenlängsebenen angeordnete Antriebswellenabschnitte (34, 35) aufweist, deren jedem ein oder mehrere Abnahmegetriebe (37, 40) zugeordnet sind.

6. Stanz-Biege-Maschine nach den Ansprüchen 4 und 5, dadurch gekennzeichnet, dass der Gehäusekasten (18, 19) mindestens zwei in nebeneinander angeordneten Bahnen befindliche Getriebegehäuse (38) aufweist, die je von einem der beiden Antriebswellenabschnitte (34, 35) durchsetzt werden.

7. Stanz-Biege-Maschine nach einem der Ansprüche 4 bis 6, dadurch gekennzeichnet, dass die Getriebegehäuse (38) im Gehäusekasten (18, 19) längsverschiebbar geführt sind.

8. Stanz-Biege-Maschine nach einem der Ansprüche 1 bis 7, dadurch gekennzeichnet, dass die koaxialen Antriebswellenabschnitte (34, 35) nicht über die Gehäusekästen (18, 19) axial vorstehen und stirnseitig durch aufgesetzte Kupplungen, insbesondere Bogenzahnkupplungen (36), miteinander verbunden sind.

9. Stanz-Biege-Maschine nach einem der Ansprüche 1 bis 8, dadurch gekennzeichnet, dass jeder Gehäusekasten (18, 19) an den stirnseitig benachbarten Gehäusekästen (18, 19) mittels Klemmverbindungen derart befestigbar ist, dass er in Querrichtung zwischen den in Position bleibenden benachbarten Gehäusekästen (18, 19) herausnehmbar ist.

10. Stanz-Biege-Maschine nach einem der Ansprüche 1 bis 9, dadurch gekennzeichnet, dass die beiden Gehäusekästen (18, 19) des letzten Gehäuses (14) durch einen Abschlusskasten (17) verbunden sind, in dem sich ein Getriebe befindet, das alle Antriebswellenabschnitte (34, 35) dieser beiden Gehäusekästen (18, 19) miteinander kuppelt.

## Revendications

1. Machine à plier et estamper comprenant plusieurs carters échangeables (14), montés les uns à la suite des autres et sur chacun desquels sont disposés à l'état réglable et échangeable un ou plusieurs ensembles à plier dont les arbres d'assemblage (40) sont accouplés, en vue d'un entraînement, à un engrenage (37) à l'intérieur de chaque carter (14), chaque carter (14) présentant aux côtés opposés des extrémités d'arbres de commande coaxiales dont chacune est accouplée d'une manière amovible à une extrémité d'arbre de commande du carter voision (14), caractérisée en ce que chaque carter (14) comprend un boîtier de carter supérieur et un boîter de carter inférieur identique (18, 19) disposés d'une façon énantiomorphe par rapport au plan horizontal médian du carter (14); en ce que les deux boîtiers (18, 19) de chaque carter (14) sont reliés l'un à l'autre aux extrémités; en ce qu'on a monté, dans les deux boîtiers de carter (18, 19), des tronçons d'arbres de commande (34, 35) identiques et parallèles, allant d'une extrémité du boîtier de carter (18, 19) à l'autre extrémité; en ce qu'on a prévu, pour chaque ensemble à plier (15), un propre engrange de réception (37, 40) agissant directement sur l'un des tronçons d'arbres de commande (34, 35); en ce que les boîtiers (18, 19) d'un carter (14) sont reliés chacun frontalement, d'une manière amovible et échangeable, et à la façon d'un système modulaire, à ceux (18, 19) du carter (14) qui suit et en ce que les tronçons d'arbres de commande (34, 35) supérieurs et inférieurs se situent chacun coaxialement et forment des arbres de commande passant par des accouplements amovibles frontaux (36).

2. Machine à plier et estamper selon la revendication 1, caractérisée en ce que deux boîtiers de carter (18, 19) disposés parallèlement forment chaque fois, conjointement avec des corps d'écartement (20) placés entre eux, un cadre rigide autoportant au moyen de propres pieds (21) pourvus éventuellement de galets de roulement.

3. Machine à plier et estamper selon l'une quelconque des revendications 1 et 2, caractérisée en ce que les ouvertures pour le passage des arbres de sortie (40) se situant transversalement sont réalisées comme des fentes longitudinales (39) dans lesquelles l'arbre de sortie (40) ou les arbres de sortie peuvent se déplacer longitudinalement.

4. Machine à plier et estamper selon l'une quelconque des revendications 1 à 3, caractérisée en ce qu'on a disposé à l'état déplaçable et fixé d'une manière amovible, dans chaque boîtier de carter, au moins un propre carter d'engrenage (38) où est montée une roue de sortie (37).

5. Machine à plier et estamper selon l'une quelconque des revendications 1 à 4, caractérisée en ce que chaque boîtier de carter (18, 19) comprend deux tronçons d'arbres de commande parallèles (34, 35) disposés de part et d'autre du plan longitudinal médian de la machine, passant par les deux carters (14) réalisés sous la forme oblongue, et à chacun desquels est ou sont adjoints un ou plusieurs engrenages de réception (37, 40).

6. Machine à plier et estamper selon l'une quelconque des revendications 4 et 5, caractérisée en ce que le boîtier de carter (18, 19) comprend au moins deux carters d'engrenage (38) se trouvant dans des voies disposées côte à côte et traversés chacun par l'un des deux tronçons d'arbres de commande (34, 35).

7. Machine à plier et estamper selon l'une quelconque des revendications 4 à 6, caractérisée en ce que les carters d'engrenage (38) sont guidés à l'état déplaçable longitudinalement dans les boîtiers de carter (18, 19).

8. Machine à plier et estamper selon l'une quelconque des revendications 1 à 7, caractérisée en ce que les tronçons d'arbres de commande coaxiaux (34, 35) ne font pas saillie au-delà des boîtiers de carter (18, 19) dans le sens axial et sont reliés les uns aux autres frontalement par des accouplements rapportés, en particulier des accouplements dentés courbes (36).

9. Machine à plier et estamper selon l'une quelconque des revendications 1 à 8, caractérisée en ce que chaque boîtier de carter (18, 19) peut être fixé, au moyen d'accouplements de serrage, sur les boîtiers de carter (18, 19) frontalement voisins et en ce qu'il peut être extrait dans le sens transversal entre les boîtiers de carter voisins (18, 19) restant en position.

10. Machine à plier et estamper selon l'une quelconque des revendications 1 à 9, caractérisée en ce que les deux boîtiers (18, 19) du dernier carter (14) sont reliés par un boîtier de fermeture (17) où se trouve un engrenage qui accouple les uns aux autres tous les tronçons d'arbres de commande (34, 35) de ces deux boîtiers de carter (18, 19).

## Claims

1. Stamping and bending machine having several interchangeable housings (14) lined up one behind the other at which one or more bending appliances (15) are adjustable and interchangeably arranged respectively, the plug-type shafts (40) thereof drivingly coupled with a gearing (37) provided within the housing (14) respectively, whereby each housing (14) has coaxial driving shaft ends at opposite sides, one driving shaft end thereof detachably coupled with a driving shaft end of the adjacent housing (14) respectively characterized in that each housing (14) comprises an upper and a lower housing box (18; 19), the lower housing indentical with the upper one and arranged mirror-invertedly thereto with respect to the center horizontal plane of the housing (14) that both housing boxes (18, 19) of each housing (14) are connected with one another at the ends, that identical parallel driving shaft portions (34, 35) extending from one end to the other one of the housing box (18; 19) are mounted in both housing boxes (18, 19), that for each bending appliance (15) an own take-off gearing (37, 40) is provided directly driven by one of the driving shaft portions (34, 35), that the housing boxes (18, 19) of one housing (14) are matizizedly connected with those (18, 19) of the adjacent housing (14) detachably and interchangeably at the front sides respectively, and that the upper and lower driving shaft portions (34, 35) are coaxially situated respectively and form through-going driving shafts by means of front-side detachable couplings (36).

2. Stamping and bending machine according to claim 1, characterized in that each two parallelly arranged housing boxes (18, 19) in connection with distance bodies (20) inserted therebetween form a rigid frame which by means of feet (21) if need be provided with bottom rollers is self-supporting.

3. Stamping and bending machine according to claim 1 or 2, characterized in that the openings for the passage of the cross-wise extending take-off shafts (40) are formed as longitudinal slots (39) in which the take-off shaft (40) or shafts are longitudinally displaceable.

4. Stamping and bending machine according to one of the claims 1 to 3, characterized in that in each housing box (18; 19) at least one own gearing housing (38) is displaceably arranged and detachably fastened, in which a take-off wheel (37) is mounted.

5. Stamping and bending machine according to claims 1 to 4, characterized in that each housing box (18, 19) has two parallel driving shaft portions (34, 35) arranged at both sides of the center longitudinal plane of the machine passing through oblong housings, one or several take-off gearings (37, 40) are coordinated to each driving shaft portion (34, 35).

6. Stamping and bending machine according to the claims 1 to 5, characterized in that the housing box (18, 19) has at least two gearing housings (38) arranged in side-by-side pathes, each one passed by one of both driving shaft portions (34, 35).

7. Stamping and bending machine according to one of the claims 4 to 6, characterized in that the gearing housings (38) are guided for longitudinal displacement in the housing box (18, 19).

8. Stamping and bending machine according to one of the claims 1 to 7, characterized in that the coaxial driving shaft portions (34,35) do not project from the housing boxes (18, 19) axially and are connected with one another at the front sides by couplings especially archtooth couplings (36).

9. Stamping and bending machine according to one of the claims 1 to 8, characterized in that each housing box (18, 19) is fastenable at the front-side adjacent housing boxes (18, 19) by clamping connections such that it is removable in cross-wise direction between the adjacent housing boxes (18, 19) remaining in position.

10. Stamping and bending machine according to one of the claims 1 to 9, characterized in that both housing boxes (18, 19) of the last housing (14) are connected with one another by an end box (17), in which a gearing is provided which couples all driving shaft portions (34, 35) of both these housing boxes (18, 19) with one another.

FIG.1

**FIG.2**

**FIG.4**

3/6

FIG. 3

FIG. 5

0 103 885

FIG.6

FIG.7

FIG.9

FIG.8

FIG.10

0 103 885